Europäisches Patentamt

European Patent Office

Office européen des brevets

(11) Veröffentlichungsnummer: **0 188 720**
**B1**

(12) **EUROPÄISCHE PATENTSCHRIFT**

(45) Veröffentlichungstag der Patentschrift:
**29.06.88**

(51) Int. Cl.⁴: **B 65 B 13/32**

(21) Anmeldenummer: **85115555.6**

(22) Anmeldetag: **06.12.85**

(54) **Spann- und Verschliessgerät für Kunststoffband.**

(30) Priorität: **23.01.85 CH 271/85**

(43) Veröffentlichungstag der Anmeldung:
**30.07.86 Patentblatt 86/31**

(45) Bekanntmachung des Hinweises auf die Patenterteilung:
**29.06.88 Patentblatt 88/26**

(84) Benannte Vertragsstaaten:
**DE FR GB IT SE**

(56) Entgegenhaltungen:
**DE-A-3 200 951**
**FR-A-1 500 570**
**FR-X-2 372 733**

(73) Patentinhaber: **Strapex AG, Nordstrasse 1, CH- 5610 Wohlen (CH)**

(72) Erfinder: **Fischer, Karl, Sommerweid 12, CH- 6362 Stansstad (CH)**

(74) Vertreter: **Patentanwälte Schaad, Balass & Partner, Dufourstrasse 101 Postfach, CH- 8034 Zürich (CH)**

## Beschreibung

Die Erfindung bezieht sich auf ein Spann- und Verschließgerät der im Oberbegriff des Anspruches 1 genannten Art.

Ein solches Gerät ist beispielsweise aus der FR-A-2 372 733 bekannt. Die Schweißzunge dieses Gerätes ist um eine Achse, welche quer zum Spalt und somit quer zu den Bandenden verläuft, schwenkbar gelagert. Ihr freies Ende ist im Bereich, in dem das untere Bandende darauf zur Anlage kommt, auf einer mit Kunststoff überzogenen Platte abgestützt gelagert. Die Schweißzunge wird durch einen, von einem Druckluftmotor angetriebenen Exzenter in Schwenkbewegungen in Bandrichtung versetzt, wodurch das freie untere Bandende hin und her bewegt wird. Dies erfordert große Kräfte und einen erheblichen Energieaufwand, weil der auf das obere Bandende einwirkende Stempel mit grosser Kraft gegen die Schweißzunge gepreßt werden muß, um das beim Absenken des Stempels von der Spanneinrichtung abgetrennte obere Bandende festzuhalten. Besonders schwierig wird eine einwandfreie Verschweißung von Bändern, deren Querschnitt von der idealen Rechteckform abweicht, und beispielsweise eher einem Oval entspricht.

Die Schweißvorrichtung eines weiteren, aus der DE-A-3 200 951 bekannten Gerätes, ist in Spannrichtung gesehen, nach der Spannvorrichtug angeordnet und weist eine am oberen Bandende angreifende, quer zur Bandrichtung bewegbare Schwingbacke auf. Der obere Bandabschnitt liegt während des Schweißvorganges zwischen der Spannvorrichtung und dem Bandvorrat, was dessen Bewegungsfreiheit behindert, so daß der Antriebsmotor der Schweißvorrichtung entsprechend groß bemessen sein muß.

Der Erfindung liegt daher die Aufgabe zugrunde, ein Gerät der eingangs genannten Art zu schaffen, mit dem auch Bänder einwandfrei verschweißt werden, deren Querschnitt von der idealen Rechteckform abweicht, wobei der Energiebedarf auf ein Minimum reduziert werden soll, um das Gerät als Handgerät auszubilden.

Die gestellte Aufgabe wird erfindungsgemäß durch die im kennzeichnenden Teil des Anspruchs 1 angegebenen Merkmale gelöst.

Bei einem solchen Gerät wird zum Verschweißen nur das untere Bandende im wesentlichen quer zur Bandrichtung bewegt, was die Kräfte auf ein Minimum reduziert, daher genügt ein Antriebsmotor mit einer solch geringen Leistung, die problemlos durch eine tragbare Batterie aufgebracht werden kann. Des weitern wird durch eine Schwenkbewegung der Schweißzunge um eine im wesentlichen parallel zur Bandrichtung verlaufenden Achse die Erzeugung von Reibungswärme im Bereich der seitlichen Ränder des Bandes gefördert, was eine großflächige und somit bessere Schweißung ermöglicht.

Durch eine bevorzugte Ausführungsform nach Anspruch 2 wird der Reibungswiderstand der Schweißzunge auf ein Minimum herabgesetzt. Eine solche Ausführungsform ist auch zur Aufnahme von großen Druckkräften ohne wesentlichen Verschleiß besonders geeignet. Die Wälzkörper können entweder Rollen oder Kugeln sein.

Eine bevorzugte Ausführungsform des Antriebsmechanismus gemäß Anspruch 3 weist ein Minimum an Gliedern auf, um die Schweißzunge hin un her und zugleich schwenkbar anzutreiben. Der Antriebsmotor kann bei einer solchen Ausführungsform vorzugsweise liegend angeordnet sein, um eine flache Bauform des Gerätes zu ermöglichen.

Eine besonders bevorzugte Ausführungsform nach Anspruch 4 wird durch den, gegenüber den herkömmlichen Geräten, wesentlich gesenkten Leistungsbedarf des Motors ermöglicht. Die Batterie kann vorzugsweise eine auf ladbare Batterie sein.

Bei einer weiteren bevorzugten Ausführungsform nach Anspruch 5 kann auf eine am Band angreifende Haltevorrichtung verzichtet werden, da die mit einer Rücklaufsperre zusammengebaute Spannvorrichtung nach dem Spannvorgang die Haltefunktion übernimmt.

Bei einer besonders bevorzugten Ausführungsform nach Anspruch 6 erfolgt der Spannvorgang von Hand, wobei das Schlitzrad als Spannelement praktisch bis zur Zerreißgrenze des Bandes eine beliebig große Bandspannung ermöglicht. Durch die Spannmöglichkeit von Hand genügt es, den Antrieb nur für den Leistungsbedarf der Schweißvorrichtung zu bemessen.

Bei einer Ausführungsform nach Anspruch 7 dient der zum Spannen vorgesehene Betätigungshebel auch zum Absenken des Klemmstempels auf das Band, so daß kein separater Betätigungshebel erforderlich ist.

Durch eine Ausführungsform nach Anspruch 8 ist gewährleistet, daß der vom Klemmstempel auf die zu verschweißenen Bandenden ausgeübte Druck stets gleichbleibend von der Einstellung der Tellerfeder und nicht vom Temperament der Bedienungsperson abhängig ist.

Die Verwendung eines Kniehebels nach Anspruch 9 zum Absenken des Klemmstempels ermöglicht eine leichtgängige Betätigung durch den Betätigungshebel, wobei insbesondere während des Schweißvorganges am Betätigungshebel nur eine geringe Rückstellkraft überwunden werden muß. Zudem erleichtert ein gelenkig angeordneter Kniehebel die Anpassung an unterschiedliche Banddicken.

Anspruch 10 beschreibt eine bevorzugte Ausführungsform für den Betätigungshebel, um diesen sowohl zur Betätigung der Spannvorrichtung wie auch zur Betätigung der Schweißvorrichtung zu verwenden.

Anspruch 11 beschreibt eine bevorzugte Ausführungsform für die Umschalteinrichtung des Betätigungshebels.

Bei einer bevorzugten Ausführungsform nach Anspruch 12 kann die Umschalteinrichtung mit einer Klinke in der einen Stellung am Klinkenrad und in der anderen Stellung an der Nockenscheibe angreifen. Da das Klinkenrad und die Nockenscheibe unmittelbar nebeneinander auf der selben Welle angeordnet sein können, genügt eine geringe Verschwenkbewegung der Klinke zum Umschalten von der einen in die andere Stellung.

Bei einer Ausführungsform nach Anspruch 13 ist stets gewährleistet, daß bei der Inbetriebnahme des Gerätes der Betätigungshebel stets auf Spannen eingestellt ist, um die Bedienung so einfach wie möglich zu halten.

Bei einer Ausführungsform nach Anspruch 14 erfolgt die Einschaltung des Motors bei der Betätigung des Betätigungshebels in der Stellung Absenken, so daß kein separat zu betätigender Motorschalter erforderlich ist. Ferner wird durch die Lehre nach Anspruch 14 erreicht, daß der Motor nicht unter der größten Last anlaufen muß.

Gemäß Anspruch 15 erfolgt die Ausschaltung des Motors in Abhängigkeit von der Anzahl Bewegungen, so daß unabhängig von der Bedienungsperson stets gleichbleibende Schweißverbindungen möglich sind. Das Ausschalten des Motors vor dem Lösen der Klemmverbindung ist jedoch erforderlich, um durch eine Abkühlzeit zu gewährleisten, daß sich die Schweißverbindung festigt.

Durch eine bevorzugte Ausführungsform nach Anspruch 16 ist gewährleistet, daß die beiden Betriebszustände "Spannen" und "Klemmen" aufrechterhalten bleiben, ohne daß hierzu der Betätigungshebel in einer bestimmten Lage gehalten werden muß. Erst durch eine Bewegung des Betätigungshebels in die der Spann- bzw. Klemmrichtung entgegengesetzte Richtung erfolgt eine Auslösung der Spannvorrichtung und des Klemmstempels.

Bei einer Ausführungsform nach Anspruch 17 ist gewährleistet, daß das Messer nur den oberen Bandabschnitt abtrennt und den unteren Bandabschnitt unbeschädigt läßt, auch wenn es auf diesem zum Anliegen kommt, da zwischen dem Messer und dem unteren Bandabschnitt keine Relativbewegung vorhanden ist.

Durch eine Ausführung nach Anspruch 18 erfolgt die Betätigung des Messers bei der Bewegung des Betätigungshebels, so daß der Schneidvorgang von der Bedienungsperson nicht gesondert beachtet werden muß.

Anhand der Zeichnungen wird ein Ausführungsbeispiel der Erfindung näher erläutert. Es zeigt:

Fig. 1 ein auf ein Packstück aufgesetztes Spann- und Verschließgerät in einer Seitenansicht bei eingelegtem Band,

Fig. 2 das Gerät nach der Fig. 1 in einer Draufsicht,

Fig. 3 das Gerät entsprechend der Fig. 2 in einer Schnittansicht von oben,

Fig. 4 das Gerät nach der Fig. 3 in einer Seitenansicht und

Fig. 5 das Gerät nach der Fig. 3 in einem Querschnitt entlang der Schnittlinie V - V.

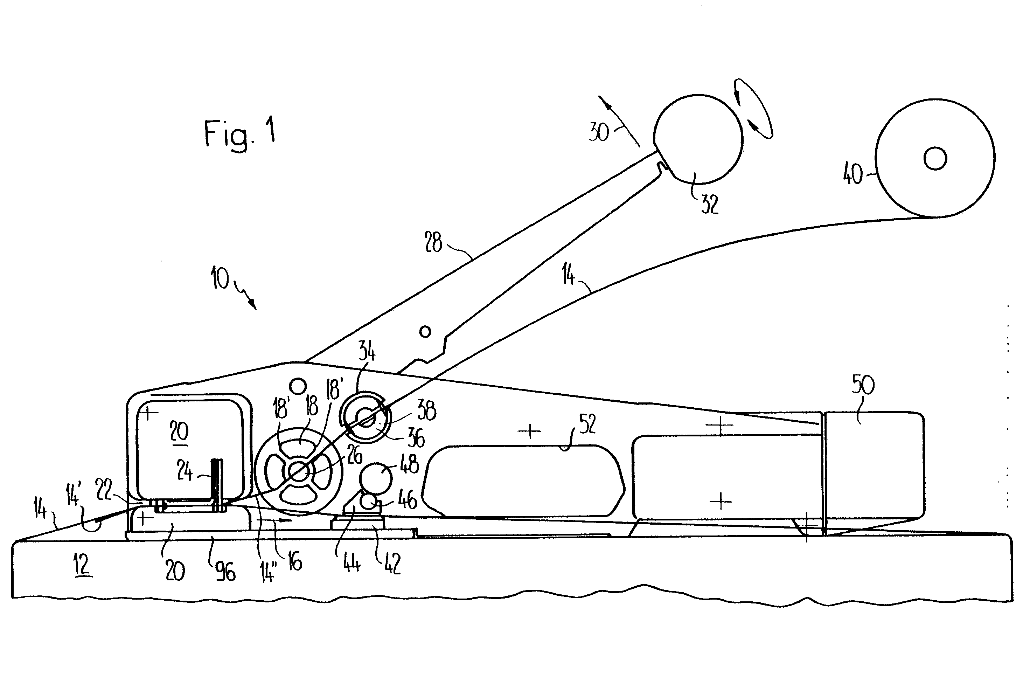

In der Fig. 1 ist ein Spann- und Verschlußgerät 10 auf ein Packstück 12 aufgesetzt, um ein um das Packstück 12 herumgelegtes thermoplastisches Kunststoffband 14 an seinen Enden 14' und 14'' zu verschweißen. Das Spann- und Verschlußgerät 10 weist eine, in Spannrichtung 16 gesehen, vor einer Spannvorrichtung 18 angeordnete, aus einem Oberteil 20 und einem Unterteil 20' bestehende Reibschweißvorrichtung auf. Zwischen dem Oberteil 20 und dem Unterteil 20' ist ein seitlich offener Spalt 22 zum Einlegen der sich überlappenden Bandenden 14' und 14'' angeordnet. Der Schweißvorrichtung 20 ist ein Messer 24 zum Abtrennen des oberen Bandendes 14'' unmittelbar nach der Schweißstelle zugeordnet.

Die Spannvorrichtung 18 besteht im wesentlichen aus einem Schlitzrad mit zwei über Kreuz angeordneten Schlitzen 18' zum Einlegen des Bandendes 14''. Wird nun das Schlitzrad 18 im Gegenuhrzeigersinn um seine Achse 26 gedreht, dann wird das eingelegte Band in Spannrichtung 16 gespannt. Zum Drehen des Schlitzrades 18 im Gegenuhrzeigersinn ist der ebenfalls auf der Achse 26 gelagerte Hand-Betätigungshebel 28 in Pfeilrichtung 30 zu verschwenken. Bei einer Schwenkbewegung in Pfeilrichtung 30 wird das Schlitzrad 18 mittels eines auf der gleichen Achse 26 angeordneten, in der Fig. 1 nicht dargestellten Klinkenrades mitgenommen. Eine ebenfalls in der Fig. 1 nicht dargestellte Sperrklinke hält das Schlitzrad 18 in der gespannten Stellung.

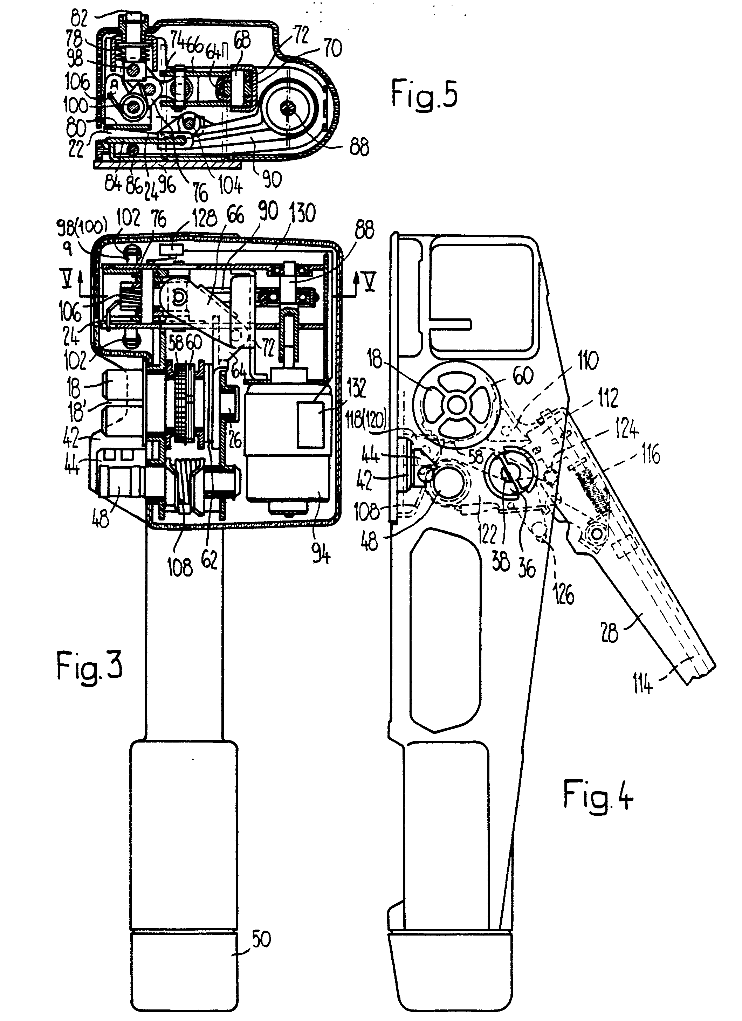

Der Betätigungshebel 28 weist einen Handgriff 32 auf, der zur Betätigung einer in der Fig. 1 nicht dargesteten Umschalteinrichtung um die Achse des Betätigungshebels 28 drehbar ist. Mittels der Umschalteinrichtung ist der Betätigungshebel 28 von der Spannvorrichtung 18 auf die Schweißvorrichtung 20 umschaltbar, wie anhand der Fig. 3 und 4 noch beschrieben werden wird.

Der Spannvorrichtung 18 ist eine Trennvorrichtung 34 nachgeordnet, welche ein in einer Messerhülse 36 drehbares Messer 38 zum Abtrennen des Bandes 14 von einer nur symbolisch dargestellten Vorratsrolle 40 aufweist. Der zwischen dem Messer 24 und der Trennvorrichtung 34 verbleibende Bandabschnitt ist infolge der Deformation durch das Schlitzrad 18 unbrauchbar und zum Wegwerfen bestimmt.

Zum Festklemmen des unteren Bandendes 14' dient ein mit einer Unterlage 42 zusammenwirkender Klemmfuß 44. Der Klemmfuß 44 ist schwenkbar auf einem Lagerzapfen 46 gelagert, welcher an einer drehbaren Welle 48 starr befestigt ist. Die Welle 48 ist durch eine in der Fig. 1 nicht dargestellte Feder im Gegenuhrzeigersinn vorgespannt, so daß der Klemmfuß 44 am unteren Bandende 14' zum Anliegen kommt und durch den Zug um das Packstück 12 herum selbsthemmend wirkt.

An dem der Schweißvorrichtung 20 entgegengesetzten Ende weist das Spann- und Verschlußgerät 10 ein Batteriefach 50 zum Einsetzen einer aufladbaren Batterie auf. Eine Aussparung 52 im mittleren Teil des Gerätes dient zum Durchgreifen und damit zur erleichterten Handhabung.

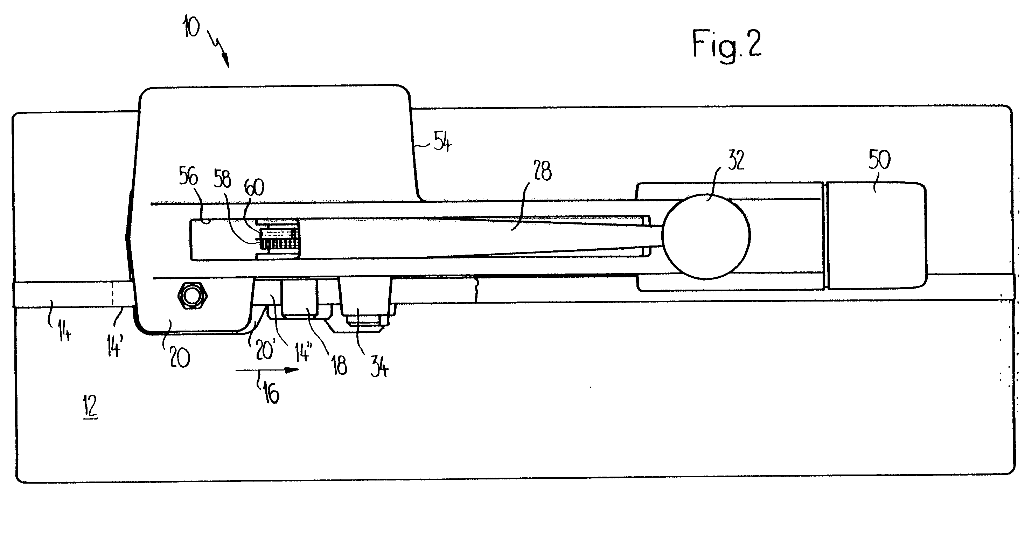

Aus der Draufsicht auf das Spann- und Verschlußgerät nach der Fig. 2 ist insbesondere die Form des Gehäuses 54 ersichtlich. Durch eine schlitzartige Öffnung 56 auf der Oberseite des Gehäuses 54 ragt der Betätigungshebel 28 heraus. Durch die Öffnung 56 ist das bereits erwähnte, mit dem Schlitzrad 18 drehfest verbundene Klinkenrad 58 sichtbar. Unmittelbar neben dem Klinkenrad 58 ist auf derselben Achse eine Nockenscheibe 60 angeordnet, durch welche die Schweißvorrichtung 20 betätigbar ist. Die Nockenscheibe 60 steht mit dem Klinkenrad 58 in keiner Drehverbindung. Die durch den Handgriff 32 betätigbare Umschalteinrichtung dient zur Herstellung einer Wirkverbindung entweder zwischen dem Betätigungshebel 28 und dem Klinkenrad 58 oder zwischen dem Betätigungshebel 28 und der Nockenscheibe 60.

Gemäß Fig. 3 ist die Nockenscheibe 60 mit einer Stößelscheibe 62 drehfest verbunden, die über einen Stößel 64 auf einen Gelenkhebel 66 einwirkt.

Gemäß Fig. 5 ist auf der Gelenkachse 68 des Gelenkes zwischen dem Stößel 64 und dem Gelenkhebel 66 eine Stützrolle 70 angeordnet, die sich auf einem ortsfesten Abstützwinkel 72 abstützt. Der Gelenkhebel 66 ist über eine Lasche 74 mit einem Kniehebel 76 verbunden. Der Kniehebel 76 ist mit seinem oberen Ende an einer ortsfest abgestützten Tellerfeder 78 abgestützt, während sein unteres Ende mit einem Klemmstempel 80 verbunden ist. Die Wirkung der Tellerfeder 78 ist an einer Stellschraube 82 einstellbar.

Unterhalb des zum Einlegen der sich überlappenden Bandenden bestimmten Spaltes 22 liegt dem Klemmstempel 80 ein in Schwingungen versetzbares Schweißelement in Form einer Schweißzunge 84 gegenüber Die Schweißzunge 84 ist auf einer seitlich geführten, als Wälzkörper dienenden Rolle 86 abwälzbar und an eine mittels eines Exzenters 88 antreibbaren Schubstange 90 angelenkt. Gemäß Fig. 3 ist der Exzenter 88 mit der Welle 92 eines liegend angeordneten Gleichstrommotors 94 verbunden.

Eine Grundplatte 96 dient zum Abstützen des Gerätes auf den zu umreifenden Packstück (siehe auch Fig. 1). Zwischen den beiden Gelenkachsen 98 und 100 des Kniehebels 76 gemäß den Fig. 3 und 5 ist zur Rückstellung des Klemmstempels 80 auf jeder Seite eine Zugfeder 102 angeordnet. Diese Zugfedern sind nur in der Fig. 3 dargestellt.

Das bereits in der Fig. 1 dargestellte Messer 24 ist über einen Meßerbolzen 104 mit der Schubstange 90 gekuppelt, um synchron zur Schweißzunge 84 und mit gleichem Hub wie diese angetrieben zu werden. Die Absenkung des Messers 24 auf das obere Bandende erfolgt über eine mit dem Klemmstempel 80 gekuppelte Torsionsfeder 106.

Die auf den Klemmfuß 44 einwirkende Andruckfeder ist in den Fig. 3 und 4 als Drehfeder 108 erkennbar, welche auf die Welle 48 einwirkt. In der Fig. 4 sind das Klinkenrad 58 und die Nockenscheibe 60 hinter dem Schlitzrad 18 angedeutet. Dem Klinkenrad 58 und der Nockenscheibe 60 ist je eine Mitnehmerklinke 110 zugeordnet, von denen jedoch jeweils nur eine durch die Umschalteinrichtung 112 beim Betätigen des Betätigungshebels 28 in Pfeilrichtung in Eingriff bringbar ist. Die Umschalteinrichtung 112 ist durch eine Drehbewegung des in den Fig. 1 und 2 dargestellten Handgriffes 32 mittels einer Umschaltstange 114 betätigbar. Eine Rückstellfeder 116 dient zur Rückstellung der Umschalteinrichtung 112, um im Ruhezustand die Verbindung des Betätigungshebels 28 mit dem Klinkenrad 58 herzustellen.

Als Rücklaufsperre greift am Klinkenrad 58 eine auslösbare Sperrklinke 118 an. Die Nockenscheibe 60 wird in der abgesenkten Stellung des Klemmstempels 80 ebenfalls durch eine Sperrklinke 120 arretiert, welche hinter der Sperrklinke 118 angeordnet und deshalb in der Fig. 4 nicht sichtbar ist. Die Auslösung der beiden Sperrklinken 118 und 120 erfolgt über einen als Auslöseglied ausgebildeten, um die Welle 48 schwenkbaren Hebel 122, welcher durch eine am Betätigungshebel 28 angeordnete Rolle 124 beim Niederdrücken des Betätigungshebels 28 entgegen der Pfeilrichtung 30 (Fig. 1) verschwenkt wird. Bei dieser Verschwenkung wird auch der Klemmfuß 44 von seiner Unterlage 42 zur Freigabe des Bandes abgehoben. Ferner wird beim Niederdrücken des Betätigungshebels 28 das drehbare Messer 38 in der Messerhülse 36 zum Abtrennen des Bandabschnittes vom Bandvorrat mittels eines Hebels 126 betätigt.

In der Fig. 3 ist ein Schalter 128 dargestellt, welcher beim Absenken des Klemmstempels 80 durch den Kniehebel 76 den Motor 94 einschaltet. Der Schalter 128 ist über eine Leitung 130 mit einer Zählvorrichtung 132 verbunden, welche nach einer vorgegebenen Anzahl Bewegungen der Schweißzunge 84 die Ausschaltung des Motors 94 bewirkt, um den Schweißvorgang zu beenden.

Das beschriebene Gerät funktioniert wie folgt:
Von der Vorratsrolle 40 abgezogenes Band 14 wird um das Packstück 12 herumgelegt, wobei das innere Ende 14' nach Niederdrücken des Betätigungshebels 28 des auf das Packstück aufgesetzten Gerätes 10 in den geöffneten Spalt zwischen der Unterlage 42 und dem Klemmschuh 44 eingelegt und durch Loslassen des Betätigungshebels 28 festgeklemmt wird. Die sich überlappenden Bandenden 14' und 14'' werden seitlich in den Spalt 22 der Schweißvorrichtung 20 eingelegt. Der noch mit der Vorratsrolle 40 verbundene Bandabschnitt 14'' wird in einen Schlitz 18' des Schlitzrades 18 und in die Trennvorrichtung 34 eingelegt. Zum Spannen des Bandes 14 um das Packstück 12 herum wird der Betätigungshebel 28 in Pfeilrichtung 30 solange und gegebenenfalls mehrmals durch Hin- und Herbewegen betätigt, bis das Band genügend gespannt ist. Die durch das Schlitzrad 18 gebildete Spannvorrichtung verbleibt durch die Wirkung der auf das Klinkenrad 58 einwirkenden Sperrklinke 118 in der gespannten Stellung, auch wenn der Betätigungshebel 28 in seine in den Fig. 1 und 4 dargestellte Ausgangsstellung zurückgeführt wird. In der Ausgangsstellung wird der Kugelförmige Handgriff 32 gedreht und der Betätigungshebel 28 erneut in Pfeilrichtung 30 um einen Winkel von etwa 90° bewegt. Bei dieser Betätigung wird der Klemmstempel 80 (Fig. 5) auf die sich überlappenden Bandenden 14′ und 14″ abgesenkt, um diese gegen die Schweißzunge 84 zu pressen. Kurz vor Erreichen der Endstellung wird der Motor 94 durch den Schalter 128 (Fig. 3) eingeschaltet. In der Endstellung erfolgt eine Verriegelung des Klemmstempels 80 durch Arretierung der Nockenscheibe 60 mittels der Sperrklinke 120.

Mit dem Einschalten des Motors 94 hat der Schweißvorgang begonnen, indem das unten liegende freie Bandende 14′ durch die an der Oberfläche aufgerauhte Schweißzunge 84 gegen das obere, durch den Klemmstempel 80 festgehaltene Bandende 14″ gerieben wird. Die Schweißzunge 84 führt dabei eine Bewegung quer zur Bandrichtung aus, wobei der Hub vorzugsweise zwischen einem und zwei Millimetern liegt. Der Querbewegung der Schweißzunge 84 in der Bandebene ist auch noch als Folge des Antriebs über den Exzenter 88 eine Rotationsbewegung um die Bandlängsachse überlagert. Eine solche, aus mehreren Bewegungskomponenten zusammengesetzte Bewegung bewirkt, daß auch Bänder einwandfrei verschweißt werden, deren Querschnitt von der idealen Rechteckform abweicht und beispielsweise eher einem Oval entspricht. Durch die entstehende Reibungswärme während der Bewegung werden die einander zugekehrten Bandflächen im Bereich der Schweißzunge aufgeschmolzen, so daß eine innige Verbindung zwischen den beiden Bandenden entsteht.

Während der Bewegung der Schweißzunge 84 wird auch das Messer 24 mit gleichem Hub wie die Schweißzunge angetrieben, um das obere Bandende 14″ zu durchtrennen. Das Messer 24 wird durch die Feder 106 niedergedrückt. Wenn das obere Bandende 14″ durch das Messer 24 abgetrennt ist, liegt das Messer 24 auf dem unteren Bandende 14′ auf, ohne dieses zu verletzen, da zwischen dem Messer 24 und dem unteren Bandende 14′ keine Relativbewegung erfolgt.

Nachdem der Motor 94 in Abhängigkeit von der Anzahl Bewegungen der Schweißzunge 84 ausgeschaltet wurde, ist der Betätigungshebel 28 entgegen der Pfeilrichtung 30 niederzudrücken, wodurch insgesamt vier Funktionen ausgelöst werden. Die Trennvorrichtung 34 trennt das durch die Spannvorrichtung 18 deformierte Bandstück vom Bandvorrat ab; die Arretierung der Spannvorrichtung 18, welche zugleich als Haltevorrichtung wirkte, wird aufgehoben; der Klemmstempel 80 gibt die miteinander verschweißten Bandenden frei und der Klemmfuß 44 wird angehoben, um das Band vollständig freizugeben. Sodann ist das Gerät seitlich vom Band wegzunehmen, womit der Umreifungsvorgang beendet ist.

Das beschriebene Gerät ist netzunabhängig, da die Speisung des für den Schweißvorgang benötigten Gleichstrommotors durch eine eingebaute, aufladbare Batterie erfolgt. Der Batteriebetrieb wird ermöglicht durch eine relativ geringe Leistungsaufnahme des Motors 94, da dieser nur das untere, an seinem Ende 14′ freie Bandstück quer zur Bandrichtung zu bewegen hat. Ein weiterer wesentlicher Vorteil des Gerätes liegt in der Einfachheit bei der Bedienung. Ein einziger Betätigungshebel mit drehbarem Handgriff ist zur Durchführung sämtlicher Funktionen bestimmt. Dadurch wird nicht nur die Bedienung vereinfacht, sondern auch eine besonders rasche Arbeitsweise ermöglicht. Über einen elektrischen Anschluß kann die eingebaute Batterie am Netz aufgeladen werden.

**Patentansprüche**

1. Spann- und Verschließgerät für Kunststoffband, mit einer, in Spannrichtung (16) gesehen, vor einer Spannvorrichtung (18) angeordneten Reibschweißvorrichtung (20), welche oberhalb eines zum Einlegen der sich überlappenden Bandenden (14′, 14″) bestimmten Spaltes (22) einen Klemmstempel (80) aufweist, dem unterhalb des Spaltes (22) eine, zur Erzeugung von Reibungswärme relativ zum Klemmstempel (80) in Schwingungen versetzbare, zum Angreifen am unteren freien Bandende (14′) bestimmte Schweißzunge (84) gegenüberliegt, um das untere Bandende (14′) relativ zum oberen, durch den Klemmstempel (80) ruhend gehaltene Bandende (14″) zu bewegen, sowie mit einer zum Halten des gespannten Bandes (14) bestimmten, in Spannrichtung (16) gesehen, nach der Schweißvorrichtung (20) angeordneten Haltevorrichtung (118), dadurch gekennzeichnet, daß die Schweißzunge (84) im wesentlichen quer zur Bandrichtung hin und her und weiter um eine im wesentlichen parallel zur Bandrichtung verlaufende Achse schwenkbar antreibbar ist.

2. Gerät nach Anspruch 1, dadurch gekennzeichnet, daß die Schweißzunge (84) kippbar auf mindestens einem Wälzkörper (86) abgestützt und mit einem Antriebsmechanismus (88, 90) zum Hin- und Herbewegen im wesentlichen quer zur Bandrichtung und zum Schwenken um eine im wesentlichen parallel zur Bandrichtung verlaufende Achse wirkverbunden ist.

5

3. Gerät nach Anspruch 2 dadurch gekennzeichnet, daß der Antriebsmechanismus einen mit einem Antriebsmotor (94) gekuppelten Exzenter (88) aufweist, an dem eine mit der Schweißzunge (84) wirkverbundene Schubstange (90) gelagert ist.

4. Gerät nach Anspruch 3, dadurch gekennzeichnet, daß der Motor ein Gleichstrommotor (94) ist, der an eine im Gerät (10) angeordnete Batterie anschaltbar ist.

5. Gerät nach Anspruch 1, dadurch gekennzeichnet, daß die Haltevorrichtung eine mit der Spannvorrichtung (18) zusammengebaute Rücklaufsperre (118) ist.

6. Gerät nach Anspruch 5, dadurch gekennzeicht, daß die Spannvorrichtung ein mit einem Hand-Betätigungshebel (28) kuppelbares Schlitzrad (18) aufweist.

7. Gerät nach Anspruch 6, dadurch gekennzeichnet, daß der Klemmstempel (80) zum Absenken mit dem Betätigungshebel (28) kuppelbar ist.

8. Gerät nach Anspruch 7, dadurch gekennzeichnet, daß der Klemmstempel (80) mittels einer einstellbaren Tellerfeder (78) einfedernd angeordnet ist.

9. Gerät nach Anspruch 7 oder 8, dadurch gekennzeichnet, daß zwischen dem Betätigungshebel (28) und dem Klemmstempel (80) ein Kniehebel (76) zum Absenken des Klemmstempels (80) angeordnet ist.

10. Gerät nach einem der Ansprüche 6 bis 9, dadurch gekennzeichnet, daß der Betätigungshebel (28) eine Umschalteinrichtung (112) zur Betätigung entweder der Spannvorrichtung (18) oder der Schweißvorrichtung (20) aufweist.

11. Gerät nach Anspruch 10, dadurch gekennzeichnet, daß die Umschalteinrichtung ein durch einen am Betätigungshebel (28) angeordneten Handgriff (32) betätigbares Umschaltelement (112) aufweist, welches in der einen Stellung eine Verbindung zwischen dem Betätigungshebel (28) und einem Klinkenrad (58) der Spannvorrichtung (I8) und in der anderen Stellung zwischen dem Betätigungshebel (28) und Übertragungsgliedern (60, 62, 64, 68, 66, 74, 76) zum Absenken des Klemmstempels (80) herstellt.

12. Gerät nach Anspruch 11, dadurch gekennzeichnet, daß die Übertragungsglieder eine auf der selben Achse (26) wie das Klinkenrad (58) gelagerte Nockenscheibe (60) aufweisen, welche über einen Gelenkhebel (66) mit dem Kniehebel (76) verbunden ist.

13. Gerät nach Anspruch 11 oder 12, dadurch gekennzeichnet, daß die Umschalteinrichtung (112) eine Rückstellfeder (116) zu ihrer Rückstellung auf das Klinkenrad (58) aufweist.

14. Gerät nach einem der Ansprüche 11 bis 13, dadurch gekennzeichnet, daß die Übertragungsglieder derart mit einem Schalter zum Einschalten des Motors (94) gekuppelt sind, daß dieser vor Erreichen des axialen Klemmdruckes gestartet wird.

15. Gerät nach Anspruch 14, dadurch gekennzeichnet, daß ein den Stromkreis des Motors (94) in Abhängigkeit von der Anzahl Bewegungen der Schweißzunge (84) unterbrechender Schalter (128, 132) vorgesehen ist.

16. Gerät nach einem der Ansprüche 10 bis 15, dadurch gekennzeichnet, daß die Rücklaufsperre eine am Klinkenrad (58) angreifende Sperrklinke (118) aufweist, daß die Übertragungsglieder in der abgesenkten Stellung des Klemmstempels (80) durch eine zweite Sperrklinke (120) arretierbar sind und daß beide Sperrklinken zur Entarretierung über ein Auslöseglied (122) mit dem Betätigungshebel (28) verbindbar sind, wenn dieser in der der Spann- bzw. Absenkbewegungsrichtung (30) entgegengesetzten Richtung bis zu einem Anschlag betätigt wird.

17. Gerät nach einem der vorstehenden Ansprüche, dadurch gekennzeichnet, daß ein zum Trennen des oberen Bandteiles (14″) bestimmtes Messer (24) derart mit der Schweißzunge (84) gekuppelt ist, daß es synchron zur Schweißzunge (84) und mit gleichem Hub wie diese antreibbar ist.

18. Gerät nach Anspruch 17, dadurch gekennzeichnet, daß das Messer (24) durch eine Feder (106) in Richtung des zu schneidenden Bandteiles (14″) vorgespannt und gemeinsam mit dem Klemmstempel (80) absenkbar angeordnet ist.

**Claims**

1. Tensioning and sealing apparatus for plastic strip, with a friction welding device (20) arranged (seen in the direction of tensioning 16) in front of a tensioning device (18), which welding device (20) has a clamping strut (80) above a cleft (22) where the overlapping strip ends (14′, 14″) are to be inserted, opposite which strut (80), and below the cleft (22), is a welding flap (84) which can be set in vibration in order to generate frictional heat in relation to the clamping strut (80) and which is intended to act on the lover free strip end (14′); in order to move the lower strip end (14′) in relation to the upper strip end (14″) kept at rest by the clamping strut (80); and with a holding device (118) for holding the tensioned strip (14), arranged (seen in the direction of welding 20) after the welding device (20); characterised in that the welding flap (84) can be driven to and fro substantially transversely to the strip direction and can further be pivoted around an axis which is substantially parallel to the strip direction.

2. Apparatus according to Claim 1, characterised in that the welding flap (84) is tiltably supported in at least one rolling member (86) and is operatively connected with a drive mechanism (88, 90) for to and fro movement substantially transversely to the strip direction and for pivoting around an axis substantially parallel to the strip direction.

3. Apparatus according to Claim 2, characterised in that the drive mechanism has an eccentric (88) coupled with a drive motor (94), on which eccentric is mounted a pusher rod (90) operatively connected with the welding flap (84).

4. Apparatus according to Claim 3, characterised in that the motor is a direct current motor (94) which can be connected with a battery arranged in the apparatus (10).

5. Apparatus according to Claim 1, characterised in that the holding device is a return stop (118) assembled with the tensioning device (18).

6. Apparatus according to Claim 5, characterised in that the tensioning device has a slotted wheel (18) which can be coupled with a hand operating lever (28).

7. Apparatus according to Claim 6, characterised in that the clamping strut (80) can be coupled with the operating lever (28) for lovering purposes.

8. Apparatus according to Claim 7, characterised in that the clamping strut (80) is arranged resiliently by means of an adjustable saucer spring (78).

9. Apparatus according to Claim 7 or 8, characterised in that a toggle lever (76) for lovering the clamping strut (80) is arranged betveen the operating lever (28) and the clamping strut (80).

10. Apparatus according to one of Claims 6 to 9, characterised in that the operating lever (28) has a switchover device (112) for operating either the tensioning device (18) or the velding device (20).

11. Apparatus according to Claim 10, characterised in that the switchover device has a svitchover element (112) operable by a handle (32) arranged on the operating lever (28), which element produces in the one position a connection between the operating lever (28) and a ratchet wheel (58) of the tensioning device (18) and in the other position a connection between the opertaing lever (28) and transmission members (60, 62, 64, 68, 66, 74, 76) for the purpose of lowering the clamping strut (80).

12. Apparatus according to Claim 11, characterised in that the transmission members have a cam disc (60) mounted on the same axle (26) as the ratchet wheel (58), which cam disc is connected with the toggle lever (76) via a hinged lever (66).

13. Apparatus according to Claim 11 or 12, characterised in that the switchover device (112) has a restoring spring (116) for setting it back on to the ratchet wheel (58).

14. Apparatus according to one of Claims 11 to 13, characterised in that the transmission members are coupled with a switch for switching on the motor (94) in such a way that the motor is started before the axial clamping pressure is reached.

15. Apparatus according to Claim 14, characterised by the provision of a switch (128, 129) which interrupts the circuit of the motor (94) depending on the number of movements of the welding flap (84).

16. Apparatus according to one of Claims 10 to 15, characterised in that the return stop has a pawl (118) acting on the ratchet wheel (58); in that the transmission members can be arrested by a second pawl (120), and that both pawls can be connected with the operating lever (28) via a release member (122) for the purpose of stopping the arresting process when this lever is operated up to a stop in the opposite direction to the tensioning or lowering movement direction.

17. Apparatus according to one of the preceding claims, characterised in that a cutter (24) for separating off the upper strip part (14″) is coupled with the welding flap (84) in such a way that it can be driven synchronously with the welding flap (84) and with the same stroke.

18. Apparatus according to Claim 17, characterised in that the cutter (24) is pretensioned by a spring (106) in the direction of the strip part (14″) to be cut and is arranged so that it can be lowered together with the clamping strut (80).

**Revendications**

1. Appareil de tension et de soudage pour bande en matière synthétique, comprenant un dispositif de soudage par friction qui, observé dans le sens de tension (16), est monté devant un dispositif tendeur (18) et présente, au-dessus d'une fente (22) destinée à la mise en place des extrémités de bande (14′, 14″) qui se chevauchent, un poinçon de serrage (80) en regard duquel se trouve, au-dessus de la fente (22), une languette de soudage (84), pouvant être amenée à effectuer des oscillations par rapport au poinçon de serrage (80) pour produire de la chaleur de frottement et destinée à agir sur l'extrémité libre inférieure (14′) de la bande, pour de déplacer l'extrémité inférieure (14′) de la bande par rapport à l'extrémité supérieure (14″) de la bande qui est maintenue immobile par le poinçon de serrage (80), ainsi qu'un dispositif de retenue (118) destiné à retenir la bande tendue (14) et qui, observé dans le sens de tension (16), est disposé derrière le dispositif de soudage (20), caractérisé en ce que la languette de soudage (84) peut être entraînée d'un mouvement alternatif sensiblement transversal à la direction de la bande et, en outre, de façon à basculer autour d'un axe s'étendant sensiblement parallèlement à la direction de la bande.

2. Appareil selon la revendication 1, caractérisé en ce que la languette de soudage (84) est supportée de manière à pouvoir basculer sur au moins un élément roulant (86) et est reliée fonctionnellement à un mécanisme de commande (88, 90) pour effectuer des mouvements alternatifs sensiblement transversalement à la direction de la bande et pour basculer autour d'un axe s'étendant sensiblement parallèlement à la direction de la bande.

3. Appareil selon la revendication 2, caractérisé en ce que le mécanisme de commande comporte un excentrique (88) relié au moteur de commande (94) et sur lequel est montée une bielle (90) reliée fonctionnellement à la languette de soudage (84).

4. Appareil selon la revendication 3, caractérisé en ce que le moteur est un moteur à courant continu (94) qui peut être raccordé à une batterie disposée dans l'appareil (10).

5. Appareil selon la revendication 1, caractérisé en ce que le dispositif de retenue est un organe (118) interdisant tout mouvement de retour et qui est associé au dispositif tendeur (18).

6. Appareil selon la revendication 5, caractérisé en ce que le dispositif tendeur est une roue à fentes (18) pouvant être couplée avec un levier de manoeuvre à main (28).

7. Appareil selon la revendication 6, caractérisé en ce que le poinçon de serrage (80) peut être couplé avec le levier de manoeuvre (28) pour le mouvement de descente.

8. Appareil selon la revendication 7, caractérisé en ce que le poinçon de serrage (80) est monté de façon à être élastiquement sollicité au moyen d'un ressort Belleville réglable (78).

9. Appareil selon la revendication 7 ou 8, caractérisé en ce qu'il est monté entre le levier de manoeuvre (28) et le poinçon de serrage (80) un levier coudé (76) pour l'abaissement du poinçon de serrage (80).

10. Appareil selon l'une quelconque des revendications 6 à 9, caractérisé en ce que le levier de manoeuvre (28) comporte un mécanisme de changement d'action (112) pour agir, soit sur le dispositif tendeur (18), soit sur le dispositif de soudage (20).

11. Appareil selon la revendication 10, caractérisé en ce que le mécanisme de changement d'action comporte un organe de changement d'action (112) qui, susceptible d'être actionné au moyen d'une poignée (32) montée sur le levier de manoeuvre (28), établit une liaison, dans l'une de deux positions, entre le levier de manoeuvre (28) et une roue à rochet (58) du dispositif tendeur (18) et, dans l'autre position, entre le levier de manoeuvre (28) et des organes de transmission (60, 62, 64, 68, 66, 74, 76) pour abaisser le poinçon de serrage (80).

12. Appareil selon la revendication 11, caractérisé en ce que les organes de transmission comportent une came-disque (60) montée sur le même axe (26) que la roue à rochet (58) et qui est reliée par l'intermédiaire d'un levier articulé (66) au levier coudé (76).

13. Appareil selon la revendication 11 ou 12, caractérisé en ce que le mécanisme de changement d'action (112) est un ressort de rappel (116) destiné à le faire revenir sur la roue à rochet (58).

14. Appareil selon l'une quelconque des revendications 11 à 13, caractérisé en ce que les organes de transmission sont reliés à un contacteur pour la mise en circuit du moteur (94) de telle manière que ce dernier soit mis en marche avant que la pression de serrage maximale soit atteinte.

15. Appareil selon la revendication 14, caractérisé en ce qu'il est prévu un contacteur (128, 132) qui interrompt le circuit du moteur (94) en fonction du nombre de mouvements de la languette de soudage (85).

16. Appareil selon l'une quelconque des revendications 10 à 15, caractérisé en ce que le mécanisme interdisant tout mouvement de retour comporte un cliquet (118) agissant sur la roue à rochet (58), en ce que les organes de transmission peuvent être bloqués par un second cliquet (120) dans la position abaissée du poinçon de serrage (80) et en ce que les deux cliquets peuvent être reliés par l'intermédiaire d'un organe de déclenchement (122) au levier de manoeuvre (28) à des fins de déblocage lorsque ce levier est déplacé dans le sens opposé au sens de tension et/ou d'abaissement (30) jusqu'à une butée.

17. Appareil selon l'une quelconque des revendications précédentes, caractérisé en ce qu'une lame (24) destinée à couper la portion supérieure (14'') de la bande est reliée de telle manière à la languette de soudage (84) qu'elle puisse être entraînée en synchronisme avec la languette de soudage (84) et en effectuant la même course que cette dernière.

18. Appareil selon la revendication 17, caractérisé en ce que la lame (24) est soumise par un ressort (106) à une tension initiale exercée dans la direction de la portion à couper (14'') de la bande et peut être abaissée conjointement avec le poinçon de serrage (80).

Fig. 1

0 188 720

Fig.2

Fig.5

Fig.3

Fig.4